# EUROPEAN PATENT SPECIFICATION

(11) **EP 3 011 112 B1**
(45) Date of publication and mention of the grant of the patent: **09.08.2017**
(21) Application number: 14737035.7
(22) Date of filing: 18.06.2014
(51) Int. Cl.: E02D 7/02

(54) **METHOD OF AND DRIVER FOR INSTALLING FOUNDATION ELEMENTS IN A GROUND FORMATION**
VORRICHTUNG UND VERFAHREN ZUM HERSTELLEN VON GRÜNDUNGSELEMENTEN IN EINEM UNTERGRUND
PROCÉDÉE ET DISPOSITIF POUR FABRIQUER DES FONDATIONS DANS UN SOL

(30) Priority: 18.06.2013 NL 2011001
(43) Date of publication of application: 27.04.2016
(73) Proprietor: IHC Holland IE B.V., 3361 EP Sliedrecht (NL)
(72) Inventor: STAM, Justin Edward, NL-1078 VB Amsterdam (NL)
(74) Representative: De Vries & Metman
(86) International application number: PCT/NL2014/050399
(87) International publication number: WO 2014/204307

(56) References cited:
- WO-A1-00/06834

## Description

The invention relates to a method of installing a foundation element, in particular a (mono)pile, in a ground formation, such as a river- or seabed, by means of a driver, e.g. a hydraulic hammer, comprising driving the foundation element into the ground formation by means of blows delivered by the driver to the foundation element. Such method generally being known from WO 00/06834 A1. The invention further relates to a driver for installing foundation elements comprising a reciprocable impact weight for delivering blows to the foundation element and an operating system configured to set blow energy and blow count of the weight.

In pile driving, an impulse-like force is applied to the top end of the pile by the impact weight of a hammer. The resulting compressive stress wave propagates downwards, towards to the tip of the pile. If resistance at the tip is high, such that the possible motion of the pile tip is close to zero, it will be reflected as a compressive stress wave. If the tip resistance is very low, such that no force can be exerted from the pile to the soil, the reflection will be a tensile stress wave. In practice, the soil resistance will vary between these extremes.

It is an object of the present invention to provide an improved method of pile driving in particular to reduce negative effects on fatigue life and/or to reduce sound emission especially when installing a foundation element in an underwater ground formation.

To this end, the method according to the present invention is characterized by estimating or measuring stress waves that are generated by the blows and reflected from the tip of the pile and, if a reflected stress wave is a tensile stress wave, reducing the blow energy.

During driving, the pile is continuously loaded with alternating compressive and tensile stresses. This causes lateral vibrations of the outer surface of the pile in turn resulting in the emission of sound pressure. It also has a negative effect on the fatigue life of the pile, as the fluctuation of compressive and especially tensile stresses accelerate the growth of voids and micro cracks in the material of the pile. With the method according to the present invention the blow energy is reduced or ideally minimized, preferably such that the pile penetration per blow is reduced to a value where the reflected tensile stress is substantially dissipated by the surrounding soil during its upward propagation, towards the top. In quantitative terms, the reflected stress wave, e.g. in terms of strain, is preferably less than 5%, preferably less than 2% of the stress wave resulting from the same blow. Thus, the reflected wave has no or a limited effect on fatigue life and sound emission is further reduced. Other parameters that may serve as an indicator of reflective waves include (but are not limited to) sound or (other) vibrations measured at a predetermined distance from the pile and so-called "quake", i.e. the elastic component of pile penetration.

In another embodiment, in addition to reducing blow energy, blow count, which conventionally is in a range from 20 to 30 blows per 0,25 meter penetration, is increased, preferably to at least 60, e.g. to at least 70, e.g. to at least 80 blows per 0,25 meter penetration. Thus, if the reduced blow energy results in a lengthening of the time needed to complete pile driving, at least part of this lengthening is compensated. It is preferred that the energy delivered per 0,25 meter penetration is (incrementally) changed, typically reduced, by a total of 30%, preferably 20% or less.

In a particularly efficient embodiment, the strain in the pile is estimated from penetration of the pile resulting from a single blow, e.g. from earlier measurements or from the speed of sound in the pile (∼5200 m/s in a steel pile), duration of the blow, surface area of the cross-section, and the fatigue endurance limit (e.g. 120 MPa).

Another embodiment comprises the step of measuring at least one of strain in the pile, acceleration, velocity or penetration (change in position) of the pile resulting from a blow. In particularly accurate embodiment, both penetration of and the strain in the pile are measured after substantially every blow. In another embodiment, said measuring is performed on a part of the pile that extends above the ground formation.

A further embodiment comprises establishing, e.g. for a specific ground formation or area, at least one blow energy and/or blow count where substantially no tensile wave is measured in driving a first pile and employing that blow energy and/or blow count to drive one or more further piles. Thus, the further pile in principle does not require equipment to carry out such measurements.

The invention also relates to a pile driver comprising a reciprocable impact weight for delivering blows to a foundation element and an operating system configured to set blow energy and blow count of the weight. The operating system is configured to estimate or measure the stress waves that are generated by the blows and reflected from the tip of the pile and, if the reflected stress wave is a tensile stress wave, reduce the blow energy.

In an embodiment, the operating system is configured to reduce the blow energy until substantially no reflected tensile wave is measured.

In another embodiment, the operating system is configured to, in addition to reducing blow energy, increase blow count. It is preferred that the energy delivered per 0,25 meter penetration is (incrementally) changed, typically reduced, by a total of 30%, preferably 20% or less.

The invention will now be explained in more detail with reference to the Figures, which show a preferred embodiment of the present method and pile driver.
Figure 1 is a cross-section of a pile driver according to the present invention.
Figures 2 to 4 are diagrams of suitable modes of operating of carrying out the invention.

It is noted that the Figures are schematic in nature and that details, which are not necessary for understanding the present invention, may have been omitted.

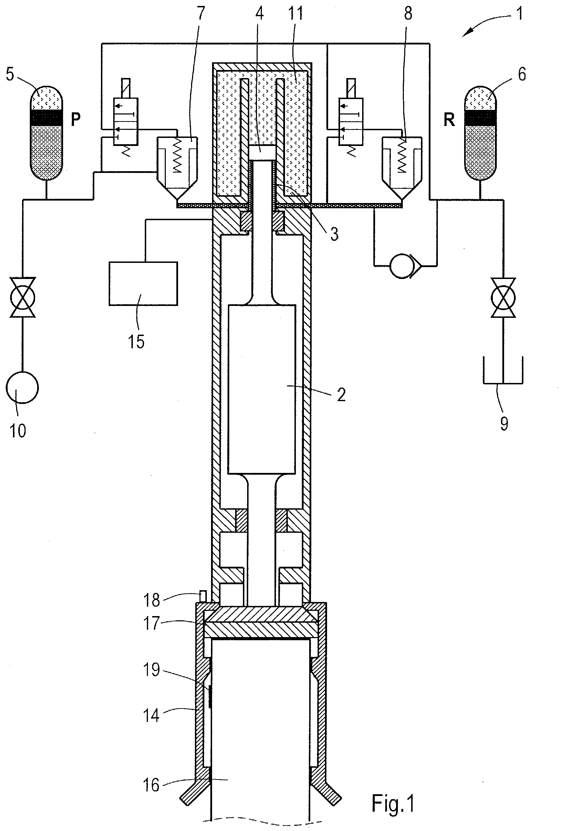

Figure 1 shows an embodiment of a pile driver 1 according to the present invention, which comprises an impact weight 2, a hydraulic cylinder 3, a piston 4 reciprocatingly accommodated in the hydraulic cylinder 3 and connected to or forming an integral part of the impact weight 2, high- and low-pressure accumulators 5, 6, and first and second valves 7, 8 for alternately connecting the cylinder space beneath the piston 4 of the hydraulic cylinder 3 to the high and low-pressure accumulators 5, 6. The system further comprises a tank 9 for a hydraulic medium, such as hydraulic oil, a feed pump 10 for pressurizing the hydraulic medium connected via the high pressure accumulator 5 and the first valve 7 to the hydraulic cylinder 3 and a gas spring or "cap" 11 above the piston 4.

When the first valve 7 is open and the second valve 8 is closed, the high-pressure accumulator 5 communicates with the cylinder space beneath the piston 4 and the piston and impact weight 2 are lifted by the hydraulic medium against the action of the gas spring 11. When the first valve 7 is closed and the second valve 8 is opened, the hydraulic medium flows to the low-pressure accumulator 6 and the tank 9 and the impact weight is accelerated by gravity and the gas spring to deliver a blow to the pile. The pile driver 1 further comprises a sleeve 14 to position the driver onto an pile and an operating system 15 configured to set blow energy and blow count of the weight. Suitable commercially available hammer include IHC Hydrohammer S-class.

The pile driver 1 shown in Figure 1 is positioned on top of a monopile 16, by means of the sleeve 14 and an anvil 17, and comprises a position sensor 18, e.g. a GPS sensor or an air pressure sensor, mounted on the pile driver 1 and a strain sensor 19, e.g. a strain gauge, attached to the monopile 16.

For a given combination of hammer, anvil and ram, the force exerted by the impact weight on the pile is controlled by the impact speed. The blow energy is calculated from the measured impact speed (just before impact) and the mass of the ram.

The operating system 15 is configured to measure, by means of the sensors 18, 19, the penetration of the pile after each blow and the stress wave that is reflected from the tip of the pile.

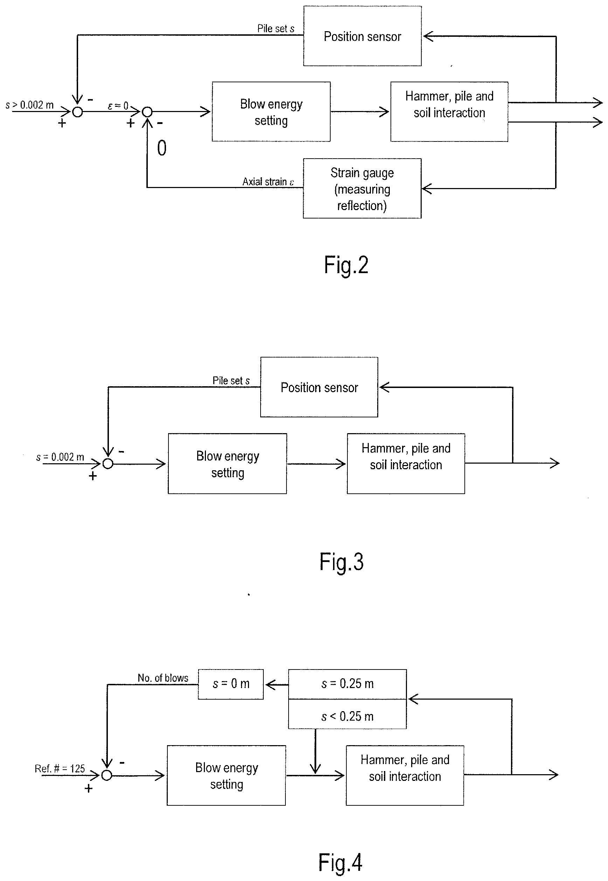

Figure 2 is diagram of the operating system, which shows that the values measured by the strain gauge and position sensor are used as feedback for the setting of the blow energy. References are e.g. *s*ₚᵢₗₑ > 0.0025 m and •_{reflection} • 0. After an estimated initial blow energy setting, the blow energy is adjusted to a setting where the pile penetration is sufficient with small reflected stresses.

This is a most effective set-up, as the actual strain and pile set is measured after every blow. The blow energy thus can be adjusted every blow, resulting in a piling process with minimal stress amplitude and lateral pile wall vibrations.

The position sensor is mounted on the hammer and thus can be used for multiple piles. The strain sensor is preferably mounted on the pile and, in that case, can be used only once.

In a further example, shown in Figure 3, the values measured by the position sensor are compared to an empirically set reference values, without the need for a strain sensor. The reference values provide to the operating system or the operator a maximal pile set per blow, as a higher value could risk reflected tensile stresses. This method is suited e.g. for projects with many piles and consistent soil conditions and where it is sufficient to equip only one or a few piles with strain gauges.

In a further example, shown in Figure 4, the blow count is compared to an empirically set reference value, e.g. 125 blows per 0,25 m. The blow count is measured by counting the number of blows between two marking lines on the pile. It is standard procedure to record the blow count during pile driving, so this method can be implemented at virtually no extra costs. As with the previous alternative, Figure 3, this method is suited for projects with many piles and consistent soil conditions. The reference value for the blow count can then be checked and corrected using the data from strain gauges and used for the piles in the vicinity.

The invention is not restricted to the embodiment described above and can be varied in numerous ways within the scope of the claims. For instance, if instrumentation is impossible or unavailable, the reference value for the blow count can be set by making calculations using soil investigations, traditional wave equation piling programs and FEM-calculations.

## Claims

1. Method of installing a foundation element, in particular a (mono)pile (16), in a ground formation by means of a driver (1), comprising
driving the foundation element (16) into the ground formation by means of blows delivered by the driver (1) to the foundation element (16), and
**characterized by**
estimating or measuring stress waves that are generated by the blows and reflected from the tip of the foundation element (16) and, if a reflected stress wave is a tensile stress wave, reducing the blow energy.

2. Method according to claim 1, wherein the blow energy is reduced until substantially no reflected tensile wave is measured.

3. Method according to claim 1 or 2, wherein, in addition to reducing blow energy, blow count is increased, preferably to at least 60 blows per 0,25 meter penetration.

4. Method according to any one of the preceding claims, wherein the energy delivered per 0,25 meter penetration is changed by 30% or less.

5. Method according to any one of the preceding claims, comprising the step of measuring at least one of strain in the foundation element (16), acceleration, velocity or penetration of the foundation element (16) resulting from a blow.

6. Method according to claim 5, comprising the step of measuring penetration of and the strain in the foundation element (16) after substantially every blow.

7. Method according to any one of the preceding claims, wherein said measuring is performed on a part of the foundation element (16) that extends above the ground formation.

8. Method according to any one of the preceding claims, comprising the step of establishing a blow energy and/or a blow count where substantially no tensile wave is measured in driving a first pile and employing that blow energy and/or blow count to drive one or more further piles.

9. Method according to any one of the preceding claims, wherein the foundation element (16) is driven into an underwater ground formation.

10. Driver (1) for installing foundation elements, in particular (mono)piles (16), in a ground formation, comprising a reciprocable impact weight (2) for delivering blows to the foundation element (16) and an operating system (15) configured to set blow energy and blow count of the weight (2), **characterised in that** the operating system (15) is configured to estimate or measure the stress waves that are generated by the blows and reflected from the tip of the foundation element (16) and, if the reflected stress wave is a tensile stress wave, reduce the blow energy.

11. Driver (1) according to claim 10, wherein the operating system is configured to reduce the blow energy until substantially no reflected tensile wave is measured.

12. Driver (1) according to claim 10 or 11, wherein the operating system is configured to, in addition to reducing blow energy, increase blow count.

13. Driver (1) according to any one of claims 10-12, wherein the energy delivered per 0,25 meter penetration is changed by 30% or less.

14. Driver (1) according to any one of claims 10-13, wherein the operating system is configured to measure at least one of strain in the foundation element (16), acceleration, velocity or penetration of the foundation element (16) resulting from a blow.

15. Driver (1) according to any one of claims 10-14, comprising a sensor (18) for measuring penetration of the foundation element (16) and a sensor (19) for measuring the strain in the foundation element (16), the latter preferably mounted on a part of the pile that extends above the ground formation, preferably at or near the top end of the pile.

## Patentansprüche

1. Verfahren zum Installieren eines Gründungselements, insbesondere eines (Mono)pfahls (16), in einer Bodenformation mittels einer Rammvorrichtung (1), mit den Schritten:
Einrammen des Gründungselements (16) in die Bodenformation durch Schläge, die durch das Rammelement (1) auf das Gründungselement (16) ausgeübt werden;
**gekennzeichnet durch**
Schätzen oder Messen von Spannungswellen, die durch die Schläge erzeugt und von der Spitze des Gründungselements (16) reflektiert werden, wobei, wenn eine reflektierte Spannungswelle eine Zugspannungswelle ist, die Schlagenergie vermindert wird.

2. Verfahren nach Anspruch 1, wobei die Schlagenergie vermindert wird, bis im Wesentlichen keine reflektierte Zugspannungswelle gemessen wird.

3. Verfahren nach Anspruch 1 oder 2, wobei zusätzlich zur Verminderung der Schlagenergie die Schlagzahl erhöht wird, vorzugsweise auf mindestens 60 Schläge pro 0,25 Meter Vortriebsstrecke.

4. Verfahren nach einem der vorangehenden Ansprüche, wobei die pro 0,25 Meter Vortriebsstrecke zugeführte Energie um 30% oder weniger geändert wird.

5. Verfahren nach einem der vorangehenden Ansprüche, mit dem Schritt zum Messens mindestens einer Belastung im Gründungselement (16), einer Beschleunigung, einer Geschwindigkeit oder eines Vortriebs des Gründungselements (16), die/der durch einen Schlag erhalten wird.

6. Verfahren nach Anspruch 5, mit dem Schritt zum Messen des Vortriebs des und der Belastung im Gründungselement (16) nach im Wesentlichen jedem Schlag.

7. Verfahren nach einem der vorangehenden Ansprüche, wobei das Messen an einem sich oberhalb der Bodenformation erstreckenden Teil des Gründungselementes (16) ausgeführt wird.

8. Verfahren nach einem der vorangehenden Ansprüche, mit dem Schritt zum Erzeugen einer Schlagenergie und/oder einer Schlagzahl, bei der im Wesentlichen keine Zugspannungswelle beim Einrammen eines ersten Pfahls gemessen wird, und Verwenden dieser Schlagenergie und/oder Schlagzahl zum Vortreiben eines oder mehrerer weiterer Pfähle.

9. Verfahren nach einem der vorangehenden Ansprüche, wobei das Gründungselement (16) in eine Unterwasserbodenformation eingerammt wird.

10. Rammvorrichtung (1) zum Installieren von Gründungselementen, insbesondere von (Mono)pfählen (16), in einer Bodenformation, mit einem hin- und hergehend bewegbaren Aufprallgewicht (2) zum Ausüben von Schlägen auf das Gründungselement (16) und mit einem Betriebssystem (15), das dafür konfiguriert ist, die Schlagenergie und die Schlagzahl des Gewichts (2) einzustellen,
**dadurch gekennzeichnet, dass**
das Betriebssystem (15) dafür konfiguriert ist, die durch die Schläge erzeugten und von der Spitze des Gründungselements (16) reflektierten Spannungswellen zu schätzen oder zu messen, und, wenn die reflektierte Spannungswelle eine Zugspannungswelle ist, die Schlagenergie zu vermindern.

11. Rammvorrichtung (1) nach Anspruch 10, wobei das Betriebssystem dafür konfiguriert ist, die Schlagenergie zu vermindern, bis im Wesentlichen keine reflektierte Zugspannungswelle gemessen wird.

12. Rammvorrichtung (1) nach Anspruch 10 oder 11, wobei das Betriebssystem dafür konfiguriert ist, zusätzlich zur Verminderung der Schlagenergie die Schlagzahl zu erhöhen.

13. Rammvorrichtung (1) nach einem der Ansprüche 10 bis 12, wobei die pro 0,25 Meter Vortriebsstrecke zugeführte Energie um 30% oder weniger geändert wird.

14. Rammvorrichtung (1) nach einem der Ansprüche 10 bis 13, wobei das Betriebssystem dafür konfiguriert ist, mindestens eine Belastung im Gründungselement (16), eine Beschleunigung, eine Geschwindigkeit oder eine Vortriebsstrecke des Gründungselements (16) zu messen, der/die durch einen Schlag erhalten wird.

15. Rammvorrichtung (1) nach einem der Ansprüche 10 bis 14, mit einem Sensor (18) zum Messen der Vortriebsstrecke des Gründungselements (16) und einem Sensor (19) zum Messen der Spannung im Gründungselement (16), wobei der letztgenannte Sensor vorzugsweise auf einem Teil des Pfahls montiert ist, der sich oberhalb der Bodenformation erstreckt, vorzugsweise an oder in der Nähe des oberen Endes des Pfahls.

## Revendications

1. Procédé d'installation d'un élément de fondation, en particulier un monopieu (16), dans une formation de sol au moyen d'un dispositif d'entraînement (1), comprenant
l'entraînement de l'élément de fondation (16) dans la formation de sol au moyen de coups délivrés par le dispositif d'entraînement (1) à l'élément de fondation (16), et
**caractérisé par**
l'estimation ou la mesure d'ondes de contrainte qui sont générées par les coups et réfléchies depuis le bout de l'élément de fondation (16) et, si une onde de contrainte réfléchie est une onde de contrainte de traction, la réduction de l'énergie de coups.

2. Procédé selon la revendication 1, dans lequel l'énergie de coups est réduite sensiblement jusqu'à ce qu'aucune onde de traction réfléchie ne soit mesurée.

3. Procédé selon la revendication 1 ou 2, dans lequel, en plus de réduire l'énergie de coups, un compte de coups est augmenté, de préférence jusqu'à au moins 60 coups par pénétration de 0,25 mètre.

4. Procédé selon l'une quelconque des revendications précédentes, dans lequel l'énergie délivrée par pénétration de 0,25 mètre est changée de 30 % ou moins.

5. Procédé selon l'une quelconque des revendications précédentes, comprenant l'étape de mesure d'au moins l'un d'un effort dans l'élément de fondation (16), d'une accélération, d'une vitesse ou d'une pénétration de l'élément de fondation (16) résultant d'un coup.

6. Procédé selon la revendication 5, comprenant l'étape de mesure de la pénétration de et la déformation dans l'élément de fondation (16) sensiblement après chaque coup.

7. Procédé selon l'une quelconque des revendications précédentes, dans lequel ladite mesure est réalisée sur une partie de l'élément de fondation (16) qui s'étend au-dessus de la formation de sol.

8. Procédé selon l'une quelconque des revendications précédentes, comprenant l'étape d'établissement d'une énergie de coups et/ou d'un compte de coups où sensiblement aucune onde de traction n'est mesurée lors de l'entraînement d'un premier pieu et d'emploi de cette énergie de coups et/ou compte de coups pour entraîner un ou plusieurs pieux supplémentaires.

9. Procédé selon l'une quelconque des revendications précédentes, dans lequel l'élément de fondation (16) est entraîné dans une formation de sol sous-marine.

10. Dispositif d'entraînement (1) pour installer des éléments de fondation, en particulier des monopieux (16), dans une formation de sol, comprenant un poids d'impact en va-et-vient (2) pour délivrer des coups à l'élément de fondation (16) et un système d'exploitation (15) configuré pour régler une énergie de coups et un compte de coups du poids (2), **caractérisé en ce que** le système d'exploitation (15) est configuré pour estimer ou mesurer les ondes de contrainte qui sont générées par les coups et réfléchies depuis le bout de l'élément de fondation (16) et, si l'onde de contrainte réfléchie est une onde de contrainte de traction, réduire l'énergie de coups.

11. Dispositif d'entraînement (1) selon la revendication 10, dans lequel le système d'exploitation est configuré pour réduire l'énergie de coups sensiblement jusqu'à ce qu'aucune onde de traction réfléchie ne soit mesurée.

12. Dispositif d'entraînement (1) selon la revendication 10 ou 11, dans lequel le système d'exploitation est configuré, en plus de réduire l'énergie de coups, pour augmenter le compte de coups.

13. Dispositif d'entraînement (1) selon l'une quelconque des revendications 10 à 12, dans lequel l'énergie délivrée par pénétration de 0,25 mètre est changée de 30 % ou moins.

14. Dispositif d'entraînement (1) selon l'une quelconque des revendications 10 à 13, dans lequel le système d'exploitation est configuré pour mesurer au moins l'un d'un effort dans l'élément de fondation (16), d'une accélération, d'une vitesse ou d'une pénétration de l'élément de fondation (16) résultant d'un coup.

15. Dispositif d'entraînement (1) selon l'une quelconque des revendications 10 à 14, comprenant un capteur (18) pour mesurer la pénétration de l'élément de fondation (16) et un capteur (19) pour mesurer l'effort dans l'élément de fondation (16), ce dernier étant de préférence monté sur une partie du pieu qui s'étend au-dessus de la formation de sol, de préférence au niveau ou près de l'extrémité supérieure du pieu.
